# EUROPÄISCHE PATENTSCHRIFT

(11) **EP 1 238 564 B1**
(45) Veröffentlichungstag und Bekanntmachung des Hinweises auf die Patenterteilung: **01.03.2006**
(21) Anmeldenummer: 00990524.1
(22) Anmeldetag: 12.12.2000
(51) Int. Cl.: H04Q 11/04, H04J 3/12

(54) **DATENÜBERTRAGUNGSSCHNITTSTELLE FÜR EIN KOPPELNETZWERK SOWIE DAZUGEHÖRIGES TESTVERFAHREN**
DATA TRANSFER INTERFACE FOR A SWITCHING NETWORK AND A TEST METHOD FOR SAID NETWORK
INTERFACE DE TRANSMISSION DE DONNEES POUR UN RESEAU DE COMMUTATION ET PROCEDE DE TEST CORRESPONDANT

(30) Priorität: 17.12.1999 DE 19961147
(43) Veröffentlichungstag der Anmeldung: 11.09.2002
(73) Patentinhaber: SIEMENS AKTIENGESELLSCHAFT, 80333 München (DE)
(72) Erfinder: TROOST, Marcel-Abraham, 81477 München (DE); LINDWURM, Franz, 80809 München (DE); LAUBNER, Karsten, 81377 München (DE)
(86) Internationale Anmeldenummer: PCT/DE2000/004409
(87) Internationale Veröffentlichungsnummer: WO 2001/045366

(56) Entgegenhaltungen:
- EP-A- 0 895 371
- GB-A- 1 412 136

## Beschreibung

Die vorliegende Erfindung bezieht sich auf eine Datenüberträgungsschnittstelle für ein Koppelnetzwerk sowie ein zugehöriges Testverfahren und insbesondere auf eine gesicherte Datenübertragungsschnittstelle zur Online-Überwachung eines Sprachspeichers in einem Koppelnetzwerk einer Telekommunikations-Vermittlungsanlage.

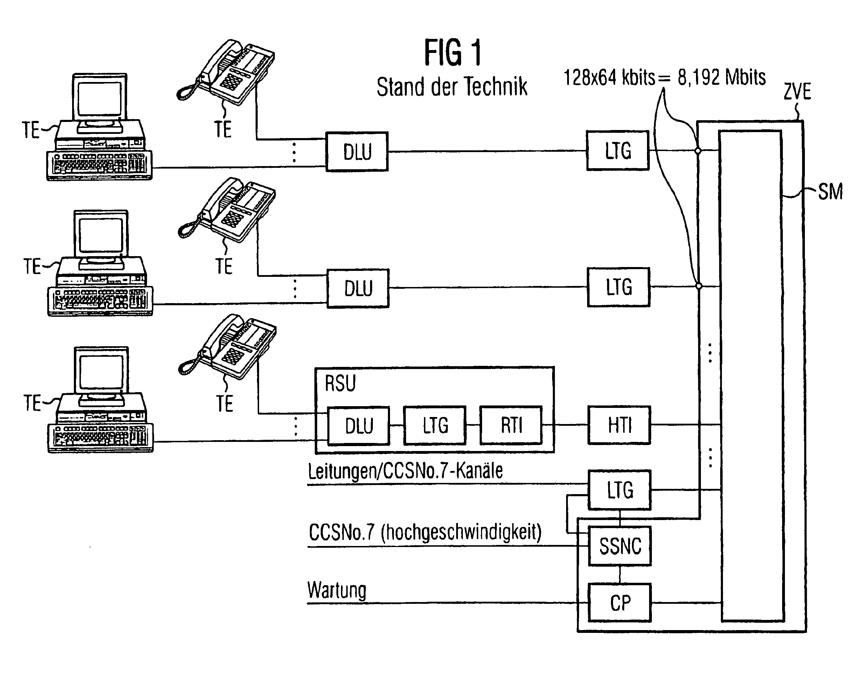

Figur 1 zeigt eine vereinfachte Blockdarstellung eines digitalen Telekommunikationssystems gemäß dem Stand der Technik, wie es beispielsweise mit der Siemens-Vermittlungsanlage EWSD realisierbar ist. Ein derartiges herkömmliches Telekommunikationssystem besteht hierbei aus einer zentralen Vermittlungseinheit ZVE, an die eine Vielzahl von Leitungsgruppen LTG (line/trunk group) oder eine Schnittstelle HTI (host time slot interchange) zum Anschließen einer abgesetzten Vermittlungseinheit RSU (remote switching unit) anschaltbar sind. An die jeweiligen Leitungsgruppen LTG bzw. die Schnittstelle für die abgesetzte Vermittlungseinheit RSU können eine Vielzahl von Teilnehmerendgeräten TE über sogenannte digitale Leitungseinheiten DLU (digital line unit) angeschlossen werden. Die abgesetzte Vermittlungseinheit RSU besitzt hierbei eine empfängerseitige Schnittstelle RTI (remote time slot interchange) sowie eine Leitungsgruppe LTG und eine digitale Leitungseinheit DLU. Ferner können auch Leitungsgruppen zum Anbinden der zentralen Vermittlungseinheit ZVE mit anderen zentralen Vermittlungseinheiten vorgesehen sein, wobei vorzugsweise CCS Nr. 7 Signalisierungsprotokolle (common channel signaling Nr. 7) weitergereicht werden.

Üblicherweise besitzt eine Datenschnittstelle zwischen Leitungsgruppe LTG und zentraler Vermittlungseinheit ZVE eine Kapazität von 128 Kanälen, die vorzugsweise eine Bandbreite von 64 kbit/s betragen. Dadurch ergibt sich eine Gesamtdatenrate von 8,192 Mbit/s. Ein derartiger Datenstrom bzw. die jeweiligen Kanäle der jeweiligen Leitungsgruppen LTG werden nunmehr von einem Koppelnetzwerk SN (switching network) unter Verwendung eines Koordinationsprozessors CP (coordination processor) und einer Signalisierungssystem-Netzwerksteuerung SSNC (signaling system network control) derart miteinander verkoppelt, daß eine Datenübertragung bzw. Verbindung zwischen einzelnen Teilnehmerendgeräten TE hergestellt wird.

Ein derartiges Koppelnetzwerk besteht hierbei aus einer Vielzahl von Baugruppenrahmen, Baugruppen sowie zugeordneten ASICS, die die für die eigentliche Vermittlung notwendigen Zeitkoppeleinheiten sowie Raumkoppeleinheiten realisieren. Für die Datenübertragung in einem derartigen Koppelnetzwerk wird üblicherweise eine von den Leitungsgruppen LTG bekannte Datenübertragungsschnittstelle verwendet.

Nachteilig ist bei einer derartigen herkömmlichen Datenübertragungsschnittstelle jedoch die Tatsache, daß innerhalb des Koppelnetzwerks keine gesicherte Datenübertragung stattfindet, die Anzahl der Verbindungsleitungen zwischen den einzelnen Koppeleinheiten relativ groß ist und darüber hinaus zum Testen der einzelnen Koppeleinheiten nur relativ aufwendige Testverfahren zur Verfügung stehen.

Aus der Druckschrift EP-A-0 895 371 ist eine Datenübertragungsschnittstelle für ein Koppelnetzwerk mit einem synchronen Zeitmultiplexrahmen zum Aufnehmen einer Vielzahl von Datenkanälen beschrieben, wobei die Datenkanäle des synchronen Zeitmultiplexrahmens aus einer Vielzahl von Nutzkanälen und Testkanälen bestehen und um zusätzliche Testbits erweitert sind.

Die Nutzkanäle dienen hierbei zur Übermittlung von Nutzinformationen. Die Testkanäle dienen zur Übermittlung von vermittlungstechnischen Informationen, sicherheits- und betriebstechnischen Informationen, Programmen im Sinne eines Ladens von Komponenten der Kommunikationseinrichtung und von Rahmentakt- und/oder Überrahmentaktinformationen. Eine einfache Überprüfung bzw. ein Test von in Koppelnetzwerken befindlichen Verbindungsspeichern bzw. Sprachspeichern, insbesondere während eines laufenden Betriebs, ist jedoch auch mit dieser herkömmlichen Schnittstelle und dem zugehörigen Verfahren nicht möglich.

Der Erfindung liegt daher die Aufgabe zugrunde, eine Datenübertragungsschnittstelle sowie ein zugehöriges Testverfahren zu schaffen, die eine Online-Überprüfung von in Koppelnetzwerken befindlichen Verbindungsspeichern bzw. Sprachspeichern auf einfache Weise ermöglicht.

Diese Aufgabe wird hinsichtlich der Schnittstelle durch die Merkmale des neuen Patentanspruchs 1 und hinsichtlich des Verfahrens durch die Maßnahmen des neuen Patentanspruchs 7 gelöst.

Insbesondere durch die Verwendung von Speicheradress-Testkanälen, wobei eine zugehörige Kanalnummer derart ausgewählt ist, dass nur jeweils ein Adressbit von jeweiligen Speicheradressen den Wert "1" aufweist, kann eine Speicheradress-Überwachung eines im Koppelnetzwerk vorhandenen Sprachspeichers einfach realisiert werden, die darüber hinaus während eines Betriebs, d.h. ohne Herunterfahren der Vermittlungsstelle durchgeführt werden kann. Eventuell defekte Baugruppen des Sprachspeichers können auf diese Weise jederzeit und problemlos erfasst und ausgetauscht werden.

In den weiteren Unteransprüchen sind weitere vorteilhafte Ausgestaltungen der Erfindung gekennzeichnet

Die Erfindung wird nachstehend anhand eines Ausführungsbeispiels unter Bezugnahme auf die Zeichnung näher beschrieben.

Es zeigen:
- Figur 1: eine vereinfachte Blockdarstellung eines Telekommunikationssystems gemäß dem Stand der Technik;
- Figur 2: eine vereinfachte Blockdarstellung eines Koppelnetzwerks mit der erfindungsgemäßen Schnittstelleneinheit;
- Figur 3: eine vereinfachte Darstellung einer Rahmenstruktur der erfindungsgemäßen Schnittstelleneinheit;
- Figur 4: eine beispielhafte Auflistung der Werte vorbestimmter Testkanäle der Rahmenstruktur der erfindungsgemäßen Schnittstelleneinheit;
- Figur 5: eine Darstellung der Kanalstruktur der in der Rahmenstruktur der erfindungsgemäßen Schnittstelleneinheit enthaltenen Datenkanäle; und
- Figur 6: eine Darstellung eines Parity-Mechanismus, wie er bei der erfindungsgemäßen Schnittstelleneinheit angewendet wird.

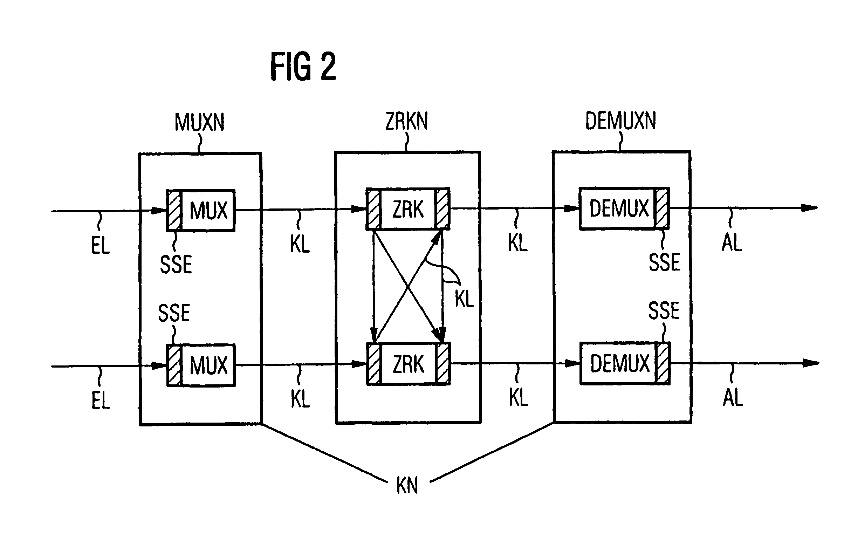

Figur 2 zeigt eine vereinfachte Blockdarstellung eines Koppelnetzwerks, wie es vorzugsweise in zentralen Vermittlungseinheiten der Firma Siemens vom EWSD-Typ D vorliegt. Derartige Koppelnetzwerke bestehen üblicherweise aus einem Konzentratornetz KN mit einem Multiplexernetz MUXN und einem Demultiplexernetz DEMUXN zum Verdichten/Demultiplexen von zu vermittelnden Datenkanälen sowie einem Zeit-/Raumkoppelnetz ZRKN zum zeitliche und räumlichen Zuordnen der Datenkanäle (eigentliche Vermittlung). Gemäß Figur 2 werden hierbei Datenkanäle, die beispielsweise über Eingangsleitungen EL in einem Zeitmultiplexverfahren dem Koppelnetzwerk zugeführt werden zunächst mittels Multiplexerstufen MUX des Konzentratornetzes KN verdichtet (z.B. 16 x 128 Datenkanäle). Anschließend werden die verdichteten Datenkanäle über Koppelnetzleitung KL zum Zeit-/Raumkoppelnetz ZRKN bzw. jeweiligen Zeit-/Raumkoppeleinheitein ZRK übertragen, wo die eigentliche zeitliche und räumliche Zuordnung (Vermittlung) der Datenkanäle erfolgt. Die räumliche und zeitliche Zuordnung kann hierbei auf beliebige Art und Weise erfolgen. Abschließend werden die zugeordneten (bzw. vermittelten) wiederum über Koppelnetzleitung KL an das Konzentratornetz zurückgeführt, wo sie mittels Demultiplexerstufen DEMUX wieder in ihr ursprüngliches Datenformat (z.B. 128 Datenkanäle zu je 64kbit/s) umgewandelt werden.

Zur Realisierung der erfindungsgemäßen Datenübertragungsschnittstelle befindet sich eine Schnittstelleneinheit SSE vorzugsweise in jeder Funktionseinheit, sie kann jedoch auch nur in Teilen des Netzwerks vorhanden sein. Diese Schnittstelleneinheit SSE dient im Koppelnetzwerk als gesicherte Datenübertragungsschnittstelle, mit der zumindest die zu vermittelnden Datenkanäle gesichert übertragen werden können. Darüber hinaus ermöglicht eine derartige Schnittstelleneinheit SSE, die sowohl als Sende- als auch als Empfangsstation ausgebildet werden kann, eine Online-Überwachung der im Koppelnetzwerk vorhandenen Baugruppenrahmen, Baugruppen sowie ASICS. Ferner ermöglicht eine derartige Datenübertragungsschnittstelle eine Reduzierung der Anzahl der Koppelnetzleitungen KL, wie nachfolgend im einzelnen erläutert wird.

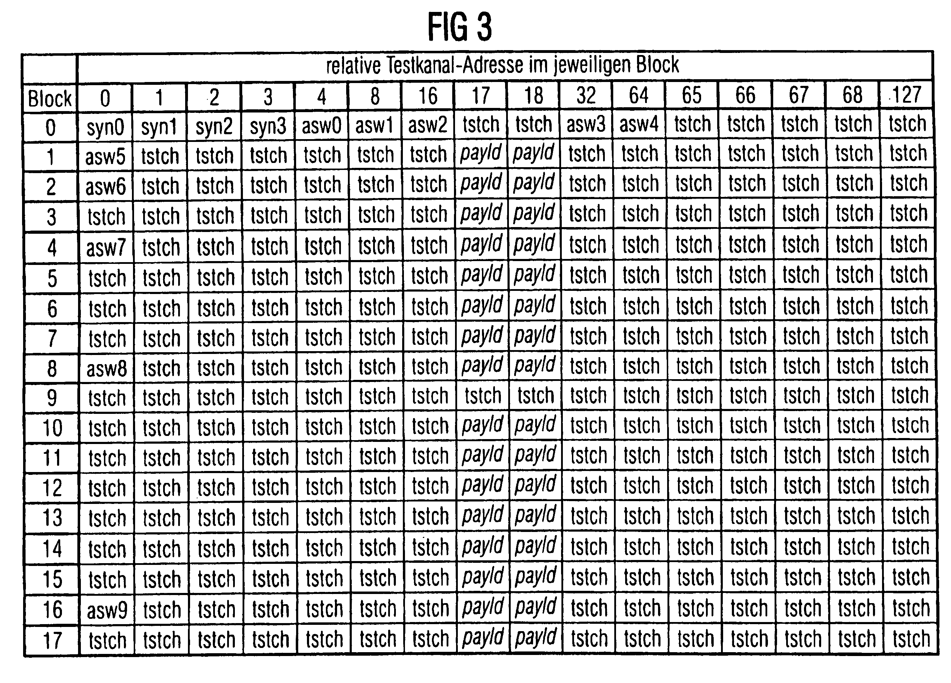

Figur 3 zeigt eine vereinfachte Darstellung der Rahmenstruktur, wie sie von der von der Schnittstelleneinheit SSE realisierten Datenübertragungsschnittstelle erzeugt wird. Gemäß Figur 3 werden Datenströme von ca. 184 Mbit/s vermittelt, wobei die Datenströme aus Testkanälen tstch, syn, asw (2 x 128 Datenkanäle) und Nutzkanälen payld (16 x 128 Datenkanäle) bestehen. In Figur 3 ist lediglich ein Ausschnitt der gesamten Rahmenstruktur (2304 Datenkanäle) dargestellt, wobei insbesondere die relativen Kanaladressen 5 bis 7, 9 bis 15, 19 bis 31, 33 bis 63 und 69 bis 126 zur Vereinfachung der Rahmenstruktur nicht dargestellt sind. Über diese weiteren relativen Kanaladressen des synchronen Zeitmultiplexrahmens werden lediglich die weiteren Nutzkanäle payld im Koppelnetzwerk übertragen.

Gemäß Figur 3 enthält der synchrone Zeitmultiplexrahmen demzufolge 16 x 128 Nutzkanäle, wie sie beispielsweise von 16 Leitungsgruppen LTG übertragen und von den Multiplexerstufen MUX des Konzentratornetzes erzeugt werden. Aufgrund dieser 16fachen Verdichtung der von den Leitungsgruppen LTG üblicherweise übertragenen Datenmenge von 128 Datenkanälen ergibt sich bereits eine wesentliche Verringerung der im Koppelnetzwerk benötigten Koppelnetzleitungen KL.

Wesentlich für die vorliegende Erfindung ist jedoch die Verwendung von 2 x 128 = 256 Testkanälen tstch, syn sowie aws, die im wesentlichen in den relativen Kanaladressen 0 bis 4, 8, 16 bis 18, 32, 64 bis 68 und 127 abgelegt sind. Auf diese Weise ergeben sich insgesamt 2304 Datenkanäle, die wiederum in 18 virtuellen Blöcken, d. h. Block 0 bis Block 17 zu je 128 Datenkanälen, zusammengefaßt sind.

Als weitere Besonderheit der vorliegenden Datenübertragungsschnittstelle gilt die Breite der jeweiligen Datenkanäle. Demzufolge besteht jeder über eine relative Kanaladresse angesteuerte Datenkanal anstelle von üblicherweise 8 Bit Daten nunmehr aus 10 Bit Daten, wodurch sich eine Erweiterung der Datenrate von 64 kbit/s auf 80 kbit/s ergibt. Eine detaillierte Beschreibung der Kanalstruktur erfolgt an anderer Stelle.

In Figur 3 ist eine Untermenge der 256 Testkanäle besonders gekennzeichnet, wobei die Testkanäle syn0 bis sny3 einer Synchronisierung der erfindungsgemäßen Datenübertragungsschnittstelle dienen und die Testkanäle asw0 bis asw9 für eine Speicheradreß-Überwachung zur Verfügung stehen. Die weiteren 242 Testkanäle stehen für weitere Anwendungen zur Verfügung, wobei beispielsweise drei Testkanäle für einen Speicheridentifikationstest genutzt werden können.

Die jeweiligen acht Datenbits der Testkanäle syn0 bis syn3 für die Synchronisierung sind vorzugsweise identisch mit den A1- und A2-Sync-Wörtern entsprechend ITU G.707/708 (International Telecommunication Union) und befinden sich an den relativen Kanaladressen 0 bis 3 des Blocks 0. Unter Verwendung dieser Sync-Wörter erhält man eine synchrone Zeitmultiplex-Datenübertragungsschnittstelle mit einer außerordentlich hohen Datenübertragungsrate, wobei die zu vermittelnde Nutzkanäle unter Verwendung einer minimalen Anzahl von Koppelnetzleitungen KL übertragen bzw. ausgetauscht werden können. Die einzelnen Baugruppenrahmen, Baugruppen bzw. ASIC's können demzufolge über jeweils voneinander unabhängige Taktversorgungseinheiten angesteuert werden, die sich gegenseitig über die erfindungsgemäße Datenübertragungsschnittstelle synchronisieren.

Eine weitere Untermenge, d.h. asw0 bis asw9, der 256 Testkanäle dient der Speicheradreß-Überwachung und ist auf besondere Art und Weise im synchronen Zeitmultiplexrahmen verteilt. Genauer gesagt wird eine Kanalnummer bzw. relative Kanaladresse dieser Speicheradreß-Überwachungswörter asw0 bis asw9 (address supervision word channel) derart ausgewählt, daß die Wörter auf eine gleiche Speicheradresse in einem (nicht dargestellten) jeweiligen Verbindungsspeicher und/oder Sprachspeicher einer jeweiligen Zeit-/Raumkoppelstufe ZRK des Koppelnetzwerks geschrieben werden. Diese Adresse ist dadurch gekennzeichnet, daß jeweils nur ein Adreßbit den Wert "1" hat.

Beispielsweise besteht eine (nicht dargestellter) sogenannter Sprachspeicher einer jeweiligen Raum-/Zeitkoppelstufe ZRK aus2304 Speicherzellen, die zur Realisierung beispielsweise einer zeitlichen Zuordnung gezielt adressiert werden können. Zur Adressierung dieser 2304 Speicherzellen sind folglich 12 Adreßbits notwendig. Die besondere Anordnung der Speicheradreß-Überwachungswörter asw0 bis asw9 in Verbindung mit den Sync-Wörtern syn1 und syn2 in den relativen Kanaladressen 1, 2, 4, 8, 32, 64, 128, 256, 512, 1024, 2028 und 4096 ermöglicht somit eine zuverlässige Überprüfung der Speicher-Adressierung. Eine nachfolgende Einheit, beispielsweise Raum-/Zeitkoppelstufe ZRK, kontrolliert hierbei an ihrem Eingang die Datenkanäle auf den betreffenden erwarteten Inhalt, wobei bei fehlerhafter Übereinstimmung ein Fehlerregister hochgezählt und an eine externe Auswerteschaltung weitergegeben werden kann. Auf diese Weise kann eine Adressierung der (Sprach-)Speicherzellen der jeweiligen Einheiten des Koppelnetzwerks hinsichtlich ihrer Funktionstüchtigkeit und korrekten Ansteuerung zuverlässig getestet werden.

Ob die verschiedenen Speicherzellen bzw. -einheiten richtig angesprochen werden bzw. keine Datenfehler erzeugen, stellt hierbei ein weiterer Überwachungsmechanismus fest, der beispielsweise mit weiteren nicht speziell markierten Testkanälen tstch realisierbar ist. Hierzu generiert beispielsweise eine sendeseitige Schnittstelleneinheit SSE in jedem synchronen Zeitmultiplexrahmen in einem bestimmten Testkanal ein spezifisches Datenmuster, wobei dieses Datenmuster für jeden Ausgang unterschiedlich ausfällt. Andererseits wird in einer empfangsseitigen Schnittstelleneinheit SSE jeder dieser zu überwachenden Testkanäle wiederum zu jedem Ausgang durchverbunden, wobei in Abhängigkeit von der Durchschaltung am Ausgang ein bestimmtes (programmierbares) Muster dahingehend geprüft wird, ob die richtige Speichereinheit bzw. -zelle (z.B. Sprachspeicher) zum richtigen Ausgang durchgeschaltet wird. Auf diese Weise läßt sich somit die fehlerfreie Funktion einer jeweiligen Zeitkoppeleinheit ZK während des Betriebs, d.h. online, überprüfen.

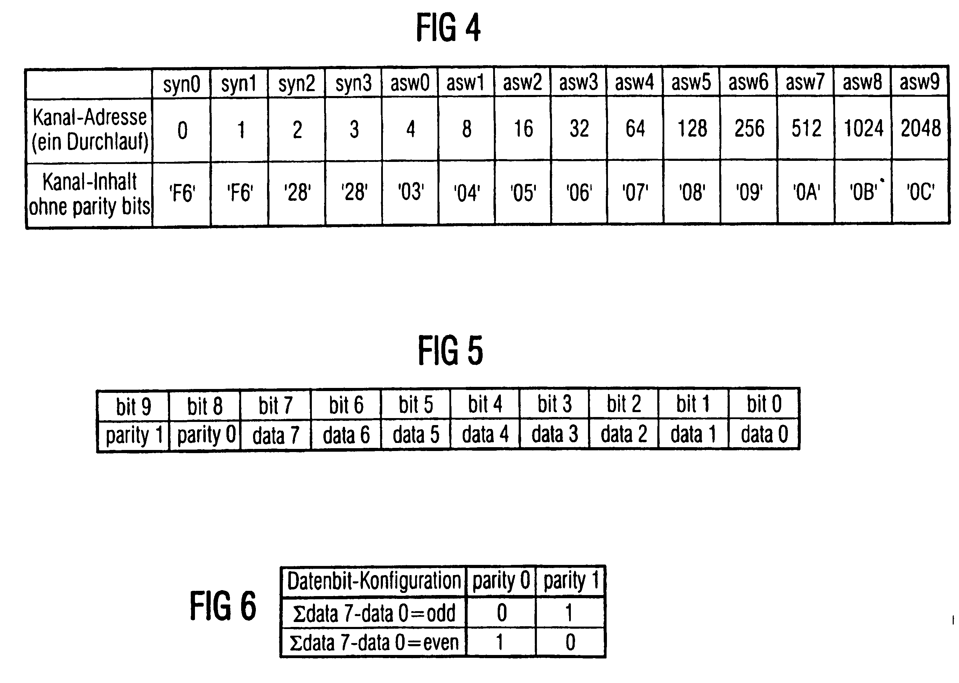

Figur 4 zeigt eine tabellarische Darstellung von beispielhaften Zahlenwerten für die vorstehend beschriebenen Testkanäle syn0 bis syn3 und asw0 bis asw9 zur Synchronisierung und Speicheradreß-Überwachung.

Demzufolge entsprechen die acht Datenbits der Sync-Wörter zur Synchronisierung den A1- und A2-Sync-Wörtern entsprechend ITU G.707/708. Es sei darauf hingewiesen, daß die Kanal-Inhalte ohne die für den Parity-Check verwendeten zusätzlichen Testbits hexadezimal dargestellt sind. Für die Daten-Wörter der Speicheradreß-Überwachung asw0 bis asw9 (address supervision word channel) werden vorzugsweise derartige Kanalinhalte verwendet, die unmittelbar einen Rückschluß auf die jeweils angesteuerte Adreßleitung eines zu prüfenden Speicherelements bzw. Speichereinheit ermöglichen. Wie bereits vorstehend beschrieben wurde, werden die Kanalnummern bzw. relativen Kanaladressen dieser Adreßwörter ferner derart gewählt, daß sie immer auf die gleiche Adresse in einer Raumkoppeleinheit und/oder Zeitkoppeleinheit geschrieben werden, wobei jeweils lediglich ein Adreßbit den Wert "1" besitzt. Dadurch ergeben sich die relativen Kanaladressen 4, 8, 16, 32, 64, 128, 256, 512, 1024 und 2048 (siehe auch Fig.3).

Figur 5 zeigt eine vereinfachte Darstellung einer Kanalstruktur der in der Rahmenstruktur gemäß Figur 3 verwendeten Datenkanäle. Demzufolge besteht sowohl ein Nutzkanal payld als auch ein Testkanal tstch, syn0 bis syn3 und/oder asw0 bis asw8 aus 10 Bits, wobei vorzugsweise Bit 9 zuerst und Bit 0 zuletzt übertragen wird. Gemäß Figur 5 bilden die als erstes übertragenen Bits 9 und 8 zusätzliche Testbits für jeden Datenkanal. Diese zusätzlichen Testbits 9 und 8 werden vorzugsweise für einen Parity-Check verwendet, wobei in Bit 9 das Parity-Bit 1 und in Bit 8 das Parity-Bit 0 übertragen wird.

Die beiden Parity-Bits 0 und 1 werden hierbei von physikalisch getrennten Blöcken nach dem in Figur 6 dargestellten Mechanismus erzeugt. Wenn demzufolge die Summe der Datenbits 0 bis 7 ungerade ist, so wird das Parity-Bit 0 auf Null gesetzt und das Parity-Bit 1 auf Eins gesetzt. Wenn demgegenüber die Summe der Datenbits 0 bis 7 gerade ist, so wird ein Parity-Bit 0 auf Eins und ein Parity-Bit 1 auf Null gesetzt. Auf diese Weise läßt sich für jeden Kanal individuell eine Online-Überwachung durchführen, wobei bei entsprechender Ausführung auch eine Lokalisierung eines jeweiligen Datenübertragungsfehlers im System ermöglicht werden kann.

Insbesondere bei der Realisierung von sogenannten Standleitungen, die von einer Vermittlungsanlage einmalig durchgeschaltet wird, können somit Störungen schnell und auf einfache Art und Weise lokalisiert werden. Darüber hinaus ist jedoch auch eine Fehlerbehandlung mit herkömmlichen Fehlerbehandlungsroutinen möglich, wodurch die Realisierung der erfindungsgemäßen Datenübertragungsschnittstelle mit außerordentlich hohen Datenraten ermöglicht und vereinfacht wird.

Zur Verhinderung eines Vortäuschens von Synchronisierungsinformation, was insbesondere bei Vorliegen von hohen Datenraten (Frequenzen) auftreten kann, wird vorzugsweise die kanalindividuelle Datensicherung der Synchron-Wörter syn0 bis syn3 mittels eines Rechenverfahrens durchgeführt, welches vom Rechenverfahren der restlichen Datenkanäle asw0 bis asw3, tstch sowie payld abweicht. Vorzugsweise werden die Parity-Bits 1 und 0 in den Synch-Wörtern syn0 bis syn3 invertiert, wodurch sich eine eindeutige Unterscheidung zu den restlichen DatenWörtern ergibt.

Bei Auftreten eines Fehlers im Parity-Check bzw. bei der Überprüfung der Testbits werden die Kanalinhalte der Nutzkanäle payld vorzugsweise durch einen "idle-code" ersetzt und weiter übertragen. Auf diese Weise wird eine Fortpflanzung des Fehlers im System verhindert und es kann eine Lokalisierung der Störung auf besonders einfache und schnelle Weise erfolgen. Andererseits können die ohnehin für ein System bekannten Kanalinhalte der Testkanäle syn0 bis syn3 sowie asw0 bis asw9 bei Auftreten eines Fehlers im Parity-Check regeneriert werden, weshalb im Koppelnetzwerk auch bei teilweise defekten Einheiten eine vollständige Überprüfung durchgeführt werden kann. Durch die Vorbelegung von bestimmten Testkanälen mit Standardinhalten läßt sich demzufolge eine Funktionskontrolle des Koppelnetzwerks bis in seine einzelnen Baugruppen und ASICs ermöglichen.

Die Erfindung wurde vorstehend anhand eines 184 Mbit/s-Rahmensignals beschrieben. Sie ist jedoch nicht darauf beschränkt und umfaßt vielmehr alle weiteren Rahmenstrukturen, welche zusätzliche Testbits und Testkanäle zur kanalindividuellen und kanalübergreifenden Überwachung und/oder Sicherung aufweisen.

## Patentansprüche

1. Datenübertragungsschnittstelle für ein Koppelnetzwerk mit
einem synchronen Zeitmultiplexrahmen zum Aufnehmen einer Vielzahl von Datenkanälen, wobei
die Datenkanäle des synchronen Zeitmultiplexrahmens aus einer Vielzahl von Nutzkanälen (payld) und Testkanälen (syn0 bis syn3, asw0 bis asw9, tstch) bestehen und um zusätzliche Testbits (parity0, parity1) erweitert sind,
**dadurch gekennzeichnet, dass**
ein Teil der Testkanäle (asw0 bis asw9) einer Speicheradreß-Überwachung dient, wobei
eine Kanalnummer der Testkanäle (asw0 bis asw9) zur Speicheradreß-Überwachung derart ausgewählt ist, daß nur jeweils ein Adressbit von jeweiligen Speicheradressen den Wert "1" aufweist.

2. Datenübertragungsschnittstelle nach Patentanspruch 1, **dadurch gekennzeichnet, dass** jeder Datenkanal aus 10 Bits besteht, wobei die ersten beiden übertragenen Bits die zusätzlichen Testbits (parity0, parityl) darstellen.

3. Datenübertragungsschnittstelle nach Patentanspruch 1 oder 2, **dadurch gekennzeichnet, dass** ein Teil der Testkanäle (syn0 bis syn3) einer Synchronisierung dient.

4. Datenübertragungsschnittstelle nach einem der Patentansprüche 1 bis 3,
**dadurch gekennzeichnet, dass** ein Teil der Testkanäle (tstch) einem Speicheridentifikationstest dient.

5. Datenübertragungsschnittstelle nach einem der Patentansprüche 1 bis 4,
**dadurch gekennzeichnet, dass** die zusätzlichen Testbits der Testkanäle (syn0 bis syn3) für die Synchronisierung zu den zusätzlichen Testbits der restlichen Daten- und Testkanäle (asw0 bis asw9, tstch, payld) invertiert sind.

6. Datenübertragungsschnittstelle nach einem der Patentansprüche 1 bis 5,
**dadurch gekennzeichnet, dass** der synchrone Zeitmultiplexrahmen 18 virtuelle Blöcke zu jeweils 128 Kanälen und eine Datenrate von ca. 184 Mbit/s aufweist.

7. Verfahren zum Testen eines Koppelnetzwerks mit einer Vielzahl von Zeitkoppeleinheiten (ZK) und Raumkoppeleinheiten (RK) bestehend aus den Schritten:
a) Erweitern von Nutz- und Testkanälen um zusätzliche Testbits (parity0, parity1);
b) Ermitteln einer Testsumme von zu sendenden Datenbits der jeweiligen Datenkanäle und entsprechendes Festlegen der Testbits;
c) Übertragen der Testbits und der Datenbits in den jeweiligen Datenkanälen;
d) Ermitteln einer Testsumme der übertragenen Datenbits; und
e) Auswerten der ermittelten Testsumme und der übertragenen Testbits zum Erfassen von Fehlern, wobei
Kanalnummern von Testkanälen(asw0 bis asw9) zur Speicheradress-Überwachung derart ausgewählt werden, dass lediglich eine vorbestimmte Adresse, bei der nur jeweils ein Adressbit von jeweiligen Speicheradressen den Wert "1" aufweist, einer Zeit- und/oder Raumkoppeleinheit (ZK, RK) beschrieben wird, wobei ein entsprechender Datenkanalinhalt an einer nachfolgenden Zeit- und/oder Raumkoppeleinheit auf Übereinstimmung geprüft wird.

8. Verfahren nach Patentanspruch 7,
**dadurch gekennzeichnet, dass** bei einer fehlerhaften Übereinstimmung ein Fehlerregister in einer Einheit inkrementiert wird.

9. Verfahren nach einem der Patentansprüche 7 oder 8,
**dadurch gekennzeichnet, dass** die Auswertung in Schritt e) für Synchronisierungs-Testkanäle (syn0 bis syn3) mittels eines Rechenverfahrens durchgeführt wird, welches von einem Rechenverfahren für die restlichen Nutz- und Testkanäle (payld, asw0 bis asw9, tstch) abweicht.

## Claims

1. Data communication interface for a switching network comprising
a synchronous time-division multiplex frame for accommodating a multiplicity of data channels, wherein the data channels of the synchronous time-division multiplex frame consist of a multiplicity of payload channels (payld) and test channels (syn0 to syn3, asw0 to asw9, tstch) and are expanded by additional test bits (parity0, parity1), **characterized in that** some of the test channels (asw0 to asw9) are used for memory address supervision, wherein
a channel number of the test channels (asw0 to asw9) for memory address supervision is selected in such a manner that in each case only one address bit of respective memory addresses has the value "1".

2. Data communication interface according to Claim 1, **characterized in that** each data channel consists of 10 bits, the first two bits transmitted representing the additional test bits (parity0, parity1).

3. Data communication interface according to Claim 1 or 2, **characterized in that** some of the test channels (syn0 to syn3) are used for synchronization.

4. Data communication interface according to one of Claims 1 to 3, **characterized in that** some of the test channels (tstch) are used for a memory identification test.

5. Data communication interface according to one of Claims 1 to 4, **characterized in that** the additional test bits of the test channels (syn0 to syn3) for the synchronization are inverted with respect to the additional test bits of the remaining data and test channels (asw0 to asw9, tstch, payld).

6. Data communication interface according to one of Claims 1 to 5, **characterized in that** the synchronous time-division multiplex frame 18 exhibits virtual blocks of in each case 128 channels and a data rate of approx. 184 Mbit/s.

7. Method for testing a switching network comprising a multiplicity of time-division switching units (ZK) and space-division switching units (RK), consisting of the following steps:
a) expanding payload and test channels by additional test bits (parity0, parity1);
b) determining a test sum of data bits of the respective data channels to be transmitted and correspondingly specifying the test bits;
c) transmitting the test bits and the data bits in the respective data channels;
d) determining a test sum of the transmitted data bits; and
e) evaluating the test sum determined and the test bits transmitted in order to detect errors, wherein
channel numbers of test channels (asw0 to asw9) for memory address supervision are selected in such a manner that only one predetermined address in which only one address bit in each case of respective memory addresses has the value "1", of a time-division and/or space-division switching unit (ZK, RK) is described, and a corresponding data channel content is checked for correspondence at a downstream time-division and/or space-division switching unit.

8. Method according to Claim 7, **characterized in that** an error register in a unit is incremented in the case of a mismatch.

9. Method according to one of Claims 7 or 8, **characterized in that** the evaluation in step e) for synchronization test channels (syn0 to syn3) is performed by means of a mathematical method which differs from a mathematical method for the remaining payload and test channels (payld, asw0 to asw9, tstch).

## Revendications

1. Interface de transmission de données pour un réseau de couplage, avec
une trame synchrone de multiplexage temporel pour recevoir une pluralité de canaux de données,
les canaux de données de la trame synchrone de multiplexage temporel se composant d'une pluralité de canaux utiles (payld) et de canaux de test (syn0 à syn3, asw0 à asw9, tstch) et étant élargis par des bits de test (parity0, parity1) supplémentaires,
**caractérisée en ce que**
une partie des canaux de test (asw0 à asw9) sert à une surveillance d'adresses de mémoires,
un numéro de canal des canaux de test (asw0 à asw9) pour la surveillance d'adresses de mémoires étant sélectionné de manière telle que seul respectivement un bit d'adresse d'adresses respectives de mémoires présente la valeur «1».

2. Interface de transmission de données selon la revendication 1,
**caractérisée en ce que** chaque canal de données se compose de 10 bits, les deux premiers bits transmis constituant les bits de test supplémentaires (parity0, parity1).

3. Interface de transmission de données selon la revendication 1 ou 2,
**caractérisée en ce qu'**une partie des canaux de test (syn0 à syn3) sert à une synchronisation.

4. Interface de transmission de données selon l'une des revendications 1 à 3,
**caractérisée en ce qu'**une partie des canaux de test (tstch) sert à un test d'identification de mémoire.

5. Interface de transmission de données selon l'une des revendications 1 à 4,
**caractérisée en ce que** les bits de test supplémentaires des canaux de test (syn0 à syn3) pour la synchronisation sont inversés par rapport aux bits de test supplémentaires des canaux de données et de test restants (asw0 à asw9, tstch, payld).

6. Interface de transmission de données selon l'une des revendications 1 à 5,
**caractérisée en ce que** la trame synchrone de multiplexage temporel comporte 18 blocs virtuels de respectivement 128 canaux et présente un débit de données d'environ 184 Mbits/s.

7. Méthode pour tester un réseau de couplage avec une pluralité d'unités de couplage temporel (ZK) et d'unités de couplage spatial (RK), composée des étapes suivantes:
a) élargissement de canaux utiles et de test par des bits de test supplémentaires (parity0, parity1);
b) détermination d'une somme de test de bits de données à émettre des canaux de données respectifs et détermination correspondante des bits de test;
c) transmission des bits de test et des bits de données dans les canaux de données respectifs;
d) détermination d'une somme de test des bits de données transmis et
e) évaluation de la somme de test déterminée et des bits de test transmis pour déterminer des erreurs,
des numéros de canal de canaux de test (asw0 à asw9) pour la surveillance d'adresses de mémoires étant sélectionnés de manière telle qu'uniquement une adresse prédéterminée, dans laquelle seul respectivement un bit d'adresse d'adresses de mémoires respectives présente la valeur «1», d'une unité de couplage temporel et/ou spatial (ZK, RK), est écrite, un contenu de canal de données correspondant étant soumis à un contrôle de concordance au niveau d'une unité suivante de couplage temporel et/ou spatial.

8. Méthode selon la revendication 7,
**caractérisée en ce que**, en cas de concordance inexacte, un registre d'erreurs est incrémenté dans une unité.

9. Méthode selon l'une des revendications 7 ou 8,
**caractérisée en ce que** l'évaluation à l'étape e) est effectuée pour des canaux de test de synchronisation (syn0 à syn3) au moyen d'une méthode de calcul qui diffère d'une méthode de calcul pour les canaux utiles et de test restants (payld, asw0 à asw9, tstch).
